# EUROPEAN PATENT APPLICATION

(11) **EP 1 927 937 A2**
(43) Date of publication of application: **04.06.2008**
(21) Application number: 07023162.6
(22) Date of filing: 29.11.2007
(51) Int. Cl.: G06K 9/66, G07D 7/00

(54) **Certificate stamp identifying system and certificate stamp identifying method**

(30) Priority: 01.12.2006 JP 2006326335
(71) Applicant: NEC Corporation, Minato-ku Tokyo (JP)
(72) Inventor: Sakakihara, Akihito, Tokyo (JP); Kondoh, Katsuhiko, Tokyo (JP)
(74) Representative: Glawe, Delfs, Moll

(57) **Abstract**

A certificate stamp identifying system is provided which is capable of reducing operator's loads in additional to registering processing of a postage stamp template and improving a storage stamp detection rate by a one time registration. In a postage stamp detecting module, a postage stamp template additional registering candidate is created from detection failed images by a postage stamp area extracting section, postage stamp template clustering section, and postage stamp template registering candidate selecting section. The postage stamp template registering candidate selecting section calculates a postage stamp detection rate and selects a postage stamp template registering candidate expected to contribute to an increase in detection improvement rate. The postage stamp template registering section displays a postage stamp template additional registering candidate on a displaying section and makes the postage stamp template additional registering candidate be registered as a postage stamp template by operations of an operator.

## Description

### Field of the Invention

The present invention relates to a certificate stamp identifying system and a certificate stamp identifying method and more particularly to the certificate stamp identifying system such as a postage stamp detecting module or a like making up an automatic mail differentiating apparatus and being used to detect a type, position, quantity, or a like of a certificate stamp such as a postage stamp affixed or printed on mail and to the certificate stamp identifying method using the certificate stamp identifying system.

### Description of the Related Art

Conventionally, in order to align, postmark, and standard-size mail (letter mail) including a postal card, a dedicated-type automatic mail differentiating apparatus has been developed for commercial use. The conventional automatic mail differentiating apparatus is made up of a scanner to capture an image such as a postage stamp and/or a destination affixed to mail, a postage detecting module to detect a postage stamp, a destination detection module to detect a destination, a surface alignment processing module to align a direction of mail, a postmarking processing module to postmark, and an sorting processing module to sort mail.

The postage detecting module has a control section to control each of components making up a main body of a postage stamp detection processing module, a storing section to store a processing program to be executed by the control section, various data, or a like, an operating section to be used by an operator, and a displaying section to display a postage stamp template or a like.

The control section functions as a postage stamp detecting section to detect a postage stamp based on image information of a postage stamp affixed to mail fed from the scanner by executing a control program stored in the storing section or as a postage stamp template registering section to register a postage stamp template. The postage stamp detecting section detects a postage stamp by performing pattern matching between image information of a postage stamp and a pre-registered postage stamp template (see, for example, Patent Reference 1 [Japanese Patent Application Laid-open No. 2003-271955]).

In order to register a specified postage stamp image as a postage stamp template in the storing section, mail to which a postage stamp to be registered is fed to the automatic mail differentiating apparatus and image information of the mail is collected at the postage stamp detecting section. When the postage stamp detecting section transfers image information of the collected mail to the postage stamp template registering section, the postage stamp template registering section makes the displaying section display image information of mail. That is, an operator operates the operating section to select a postage stamp area in an image and to register a specified postage stamp image on a tool of the postage stamp template registering section. In the postage stamp template registering section, when all postage stamp templates are registered, the postage stamp template is transferred to the postage stamp detecting section.

In later days, if a postage stamp image is to be additionally registered as a postage stamp template, when images likely to contribute to an increase in the improvement of a postage stamp detection rate are selected by an operator, out of images of postage stamps that the postage stamp detecting section has failed in the detection, the postage stamp detecting section or postage stamp template registering section repeatedly performs a process of collecting the above image information, process of registering postage stamp images, and process of transferring a template.

Since a postage stamp to be detected by the postage stamp detecting module having a new design is issued at any time, in order to keep a high detection rate, registration of a newly - distributed postage stamp is required ordinarily. Moreover, registration of a postage stamp being visually different, even if being originally of the same kind, from a registered postage stamp due to a printing error or a like is necessary in the same way.

In the conventional postage stamp registering method, at a time of a fall of the postage stamp detection rate, when an operator additionally registers an image, since additional registering processing is performed after the selection of an image being likely to contribute to the improvement of a postage stamp detection rate out of images of postage stamps that the postage stamp detecting section has failed in detecting, loads to an operator become large. Moreover, since an additionally registered postage stamp is judged from a personal point of view, it is difficult to predict to what degree the detection rate after registration is improved.

Technology is disclosed in which, in the destination detection by the destination detecting module, in order to raise a detection rate, if a result of reading destinations shows that the read addresses are not registered destination addresses, an image of mail and a result from reading destinations are displayed in the displaying section and, after the inputting of results from correct/incorrect judging, when a destination is judged as correct, the registered destination address is registered in an address data base. The method of detecting a destination can be applied to a postage stamp detection in the postage stamp detection module.

However, when such an automatic learning as above is made, the method can be applied when a correct destination address is known as a correct answer value and, therefore, it is difficult to apply the method of detecting a destination to the detection of a postage stamp. Moreover, it is necessary that the judgment of correct/incorrect is made by an operator and results from correct/incorrect judgment are input by the operator.

Furthermore, another technology is disclosed in which, in the detection of destinations by the address detection module, a mail address and destinations are read and correct address by referring to address data is judged and a result of the address judgment is amended if necessary by referring to a destination dictionary based on the read destination and, when the number of times of judging addresses becomes a reference value or more, not registered destinations are registered in the destination dictionary to improve reliability (see, for example, Patent Reference 2 [Japanese Patent Application Laid-open No. 2000-279894]).

A first problem to be solved is that, when a postage stamp template is to be additionally registered, large loads are unavoidably imposed on an operator. That is, even when the above conventional technology for detecting a destination is applied to the detection of a postage stamp, it is necessary that postage stamp images having approximately the same images of the postage stamps having been not yet detected are identified the next time and thereafter and, after the identification is made possible, even if postage stamp images having approximately the same images of not-detected postage stamps are automatically registered when the above postage stamp images are obtained the reference number of times or more, the clipping process of the postage stamp area has to be still performed by an operator.

A second problem to be solved is that it is difficult to reliably improve the postage stamp detection rate. That is, even when the above conventional technology for detecting a destination is applied to the detection of a postage stamp, it is still necessary that postage stamp images having approximately the same images of the postage stamps having been not yet detected are identified the next time and thereafter and, after the identification is made possible, even if postage stamp images having approximately the same images of not-detected postage stamps are automatically registered when the above postage stamp images are obtained the reference number of times or more, when an object to be detected is a postage stamp, it is difficult to expect the improvement of reliability (improvement of detection rate) .

### SUMMARY OF THE INVENTION

In view of the above, it is the first object of the present invention to provide a certificate stamp identifying system which is capable of reducing loads on operators and a certificate stamp identifying method using the system. It is the second object of the present invention to provide a certificate stamp identifying system which is capable of reliably improving a detection rate by one time registration and a certificate stamp identifying method using the system.

According to a first aspect of the present invention, there is provided a certificate stamp identifying system including:
a template storing means to store templates of various certificate stamps;
a certificate stamp image obtaining means to obtain image information of each of the certificate stamps affixed to paper sheets; and
a certificate stamp detecting means to detect each of the certificate stamps based on a result from matching between the obtained image information of each of the certificate stamps and each of the templates;
wherein the certificate stamp detecting means include a template creating means to create, when judging that there is no template matching with any one of the certificate stamps, a template of each of the certificate stamps having been not detected based on the image information;
wherein the template creating means includes a candidate selecting means to select template candidates from the image information of a plurality of the certificate stamps having been not detected based on a specified rule, a trial detection operating means to perform trial detection of each of the certificate stamps based on a result from matching between the not-detected image information excepting the template candidates, a detection rate calculating means to calculate a detection rate showing a rate of the certificate stamps newly becoming detectable to the not-detected certificate stamps at a time of the trial detection operations by using the template candidates, and a template selecting means to select the template candidates each having the detection rate being a specified value or more as the template.

In the foregoing, a preferable mode is one wherein the candidate selecting means selects a plurality of template candidates, the trial detection operating means performs an operation of detecting each of the certificate stamps on a trial basis by using each of the template candidates and the detection rate calculating means calculates a detection rate corresponding to each of the template candidates.

Also, a preferable mode is one that wherein includes a template registration control means to register the template created by the template creating means as the template to be used for detection of each of the certificate stamps in the template storing means.

Also, a preferable mode is one that wherein includes a displaying control means to display the template created by the template creating means on a displaying means and an operating means to perform registration operation of the template and
wherein the template registration control means, when an operation for registration is performed by an operator via the operating means, makes the template be registered in the template storing means.

Also, a preferable mode is one wherein the displaying control means displays the template and corresponding detection rate on the displaying means.

Also, a preferable mode is one wherein the template creating means includes a postage stamp area extracting means to extract image information of a postage stamp area based on image information of the paper sheets obtained by the certificate stamp image obtaining means.

Also, a preferable mode is one wherein the template creating means obtains color image information of the paper sheets and wherein the postage stamp area extracting means includes a background color estimating means to estimate a background color surrounding a postage stamp area based on color image information of the paper sheets and an image processing means to use an image of an area left after removing a background pixel out of specified areas of the paper sheets as a postage stamp area image.

Also, a preferable mode is one wherein the template creating means includes a certificate stamp image classifying means to classify a plurality of pieces of not-detected image information into groups each made up of collected pieces of the image information having approximately same features and wherein the candidate selecting means selects the template candidate representing each of the groups out of the not detected image information belonging to the groups.

Also, a preferable mode is one wherein the candidate selecting means randomly selects the template candidate out of a plurality of pieces of not-detected image information of the certificate stamps.

Also, a preferable mode is one wherein the certificate stamp detecting means serves also as the trial detection operating means.

Furthermore, a preferable mode is one wherein the system is used in an automatic mail differentiating apparatus to differentiate mail being the paper sheets and identifies postage stamps serving as the certificate stamps affixed to the mail.

According to a second aspect of the present invention, there is provided a certificate stamp identifying method including:
a certificate stamp image obtaining step of obtaining image information about various certificate stamps affixed to paper sheets; and
a certificate stamp detecting step of detecting each of the certificate stamps based on results from matching between the obtained image information and each of templates of the certificate stamps stored in a template storing means;
wherein, if it is judged that there is no matched template in the certificate stamp detecting step, a template creating step is performed to create templates of the not detected certificate stamps; and
wherein the template creating step includes:
a candidate selecting step of selecting a template candidate out of a plurality of pieces of the image information about the certificate stamps having not been detected;
a trial detection operating step of performing an operation of detecting each of the certificate stamps on a trial basis based on a result from matching between the information about the not-detected images excepting the template candidate and the template candidate;
a detection rate calculating step of calculating a detection rate of the certificate stamps newly becoming detectable at a time of the trial detection operating step to the certificate stamps having not been detected by using the template candidate; and
a template selecting step of selecting the template candidate having the detection rate being a specified value or more as the template.

With the above configurations, the candidate selecting means selects a template candidate out of image information about a plurality of not-detected certificate stamps based on a specified rule, the trial detecting means detects a certificate stamp on a trial basis by performing matching between image information about not detected postage stamp except a template candidate and a template candidate, the detection rate calculating means calculates, by using a template candidate, a detection rate showing a rate of a certificate stamp becoming newly detectable out of not detected certificate stamps at a time of trial detection, and the template selecting means selects additional template candidates having the detection rate being a specified value or more as a template and, therefore, registration of a template can be automatically, easily and reliably realized, thereby enabling the reduction of loads on operators in the registering process of a template.

With another configuration as above, the candidate selecting means selects a template candidate out of image information about a plurality of not-detected certificate stamps based on a specified rule, the trial detecting means detects a certificate stamp on a trial basis by performing matching between image information about not-detected postage stamp except a template candidate and a template candidate, the detection rate calculating means calculates, by using a template candidate, a detection rate showing a rate of a certificate stamp becoming newly detectable out of not-detected certificate stamps at a time of trial detection, and the template selecting means selects additional template candidates having the detection rate being a specified value or more as a template and, therefore, after the calculation of the detection rate and verification, a template registering candidate expected to contribute to improvement of the detection rate, thus enabling reliable improvement of the certificate stamp detection rate by one time registration.

### BRIEF DESCRIPTION OF THE DRAWINGS

The above and other objects, advantages, and features of the present invention will be more apparent from the following description taken in conjunction with the accompanying drawings in which:
Fig. 1 is a diagram explaining configurations of a postage stamp detecting module according to the first embodiment of the present invention;
Fig. 2 is a block diagram showing configurations of an automatic mail differentiating apparatus equipped with the postage stamp detecting module according to the first embodiment of the present invention;
Fig. 3 is a block diagram showing configurations of the postage stamp detecting module according to the first embodiment of the present invention;
Fig. 4 is a process and procedure diagram explaining operations of the postage stamp detecting module according to the first embodiment of the present invention;
Fig. 5 is also a process and procedure diagram explaining operations of the postage stamp detecting module according to the first embodiment of the present invention;
Fig. 6 is also a process and procedure diagram explaining operations of the postage stamp detecting module according to the first embodiment of the present invention; and
Fig. 7 is a block diagram showing configurations of a postage stamp detecting module according to a second embodiment of the present invention.

### DETAILED DESCRIPTION OF THE PREFERRED EMBODIMENTS

Best modes of carrying out the present invention will be described in further detail using various embodiments with reference to the accompanying drawings.

By making the candidate selecting means to select a template candidate out of image information about a plurality of not-detected certificate stamps based on a specified rule, the trial detecting means to detect a certificate stamp on a trial basis by performing matching between image information about not detected postage stamps except an additional template candidate and an additional template candidate, the detection rate calculating means to calculate, by the addition of an additional template candidate, a detection rate showing a rate of a certificate stamp becoming newly detectable out of not- detected certificate stamps at a time of trial detection, and the template selecting means to select additional template candidates having the detection rate being a specified value or more as an template, the first object to perform additional registration of a template automatically, simply, and reliably and to reduce loads on an operator in the process of additional registration of a template can be achieved.

By making the candidate selecting means to select an additional template candidate out of image information about a plurality of not-detected certificate stamps based on a specified rule, the trial detecting means to detect a certificate stamp on a trial basis by performing matching between image information about not-detected postage stamp except a template candidate and an additional template candidate, the detection rate calculating means to calculate, by the addition of an additional template candidate, a detection rate showing a rate of a certificate stamp becoming newly detectable out of not-detected certificate stamps at a time of trial detection, and the additional template selecting means to select additional template candidates having the detection rate being a specified value or more as an additional template and, therefore, after the calculation of the detection rate and verification, a template registering candidate expected to contribute to improvement of the detection rate, thus achieving the second object to reliably improve the certificate stamp detection rate by one time registration.

### First Embodiment

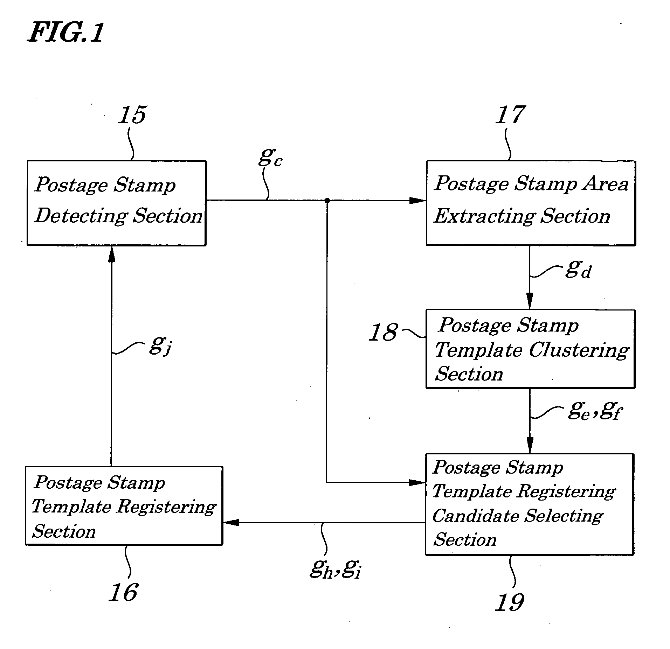

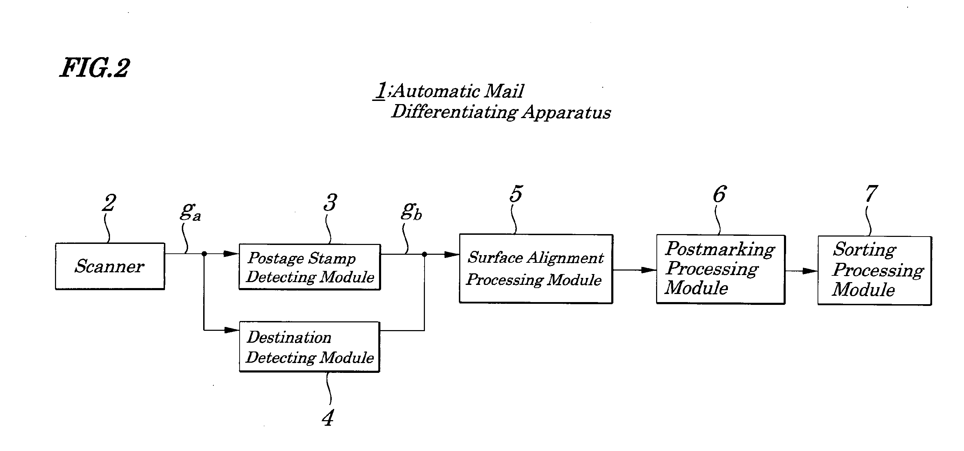

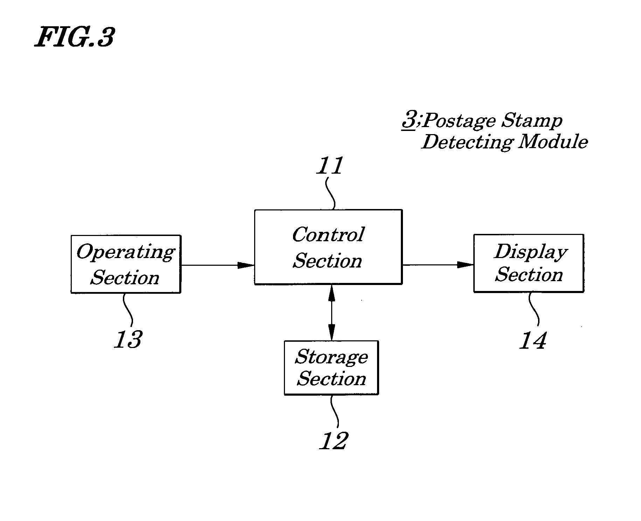

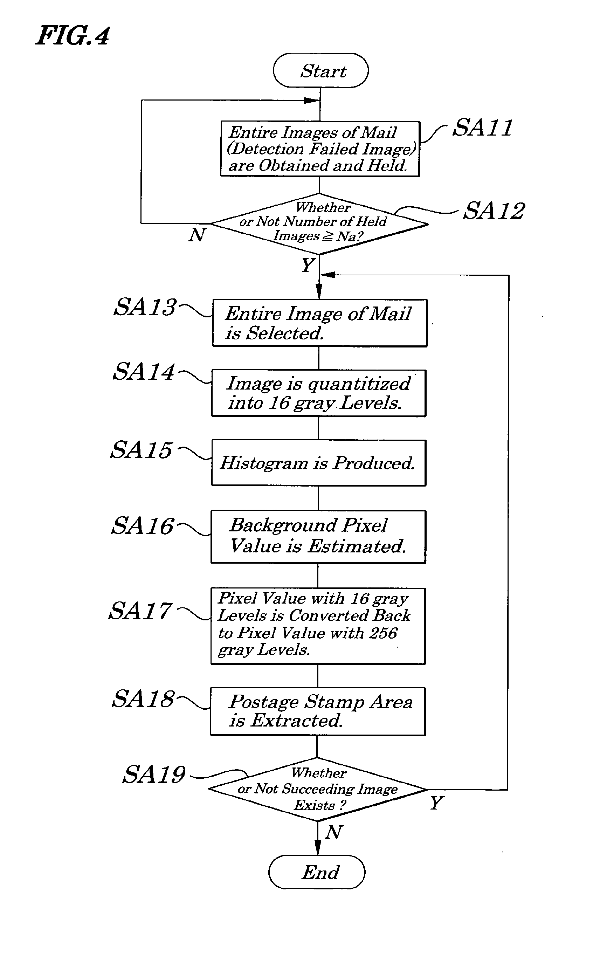

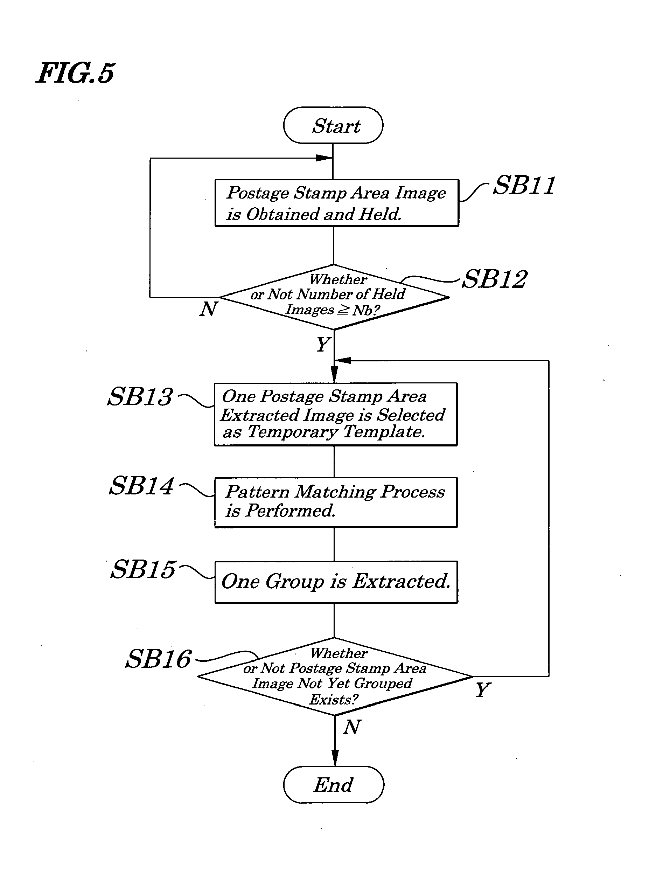

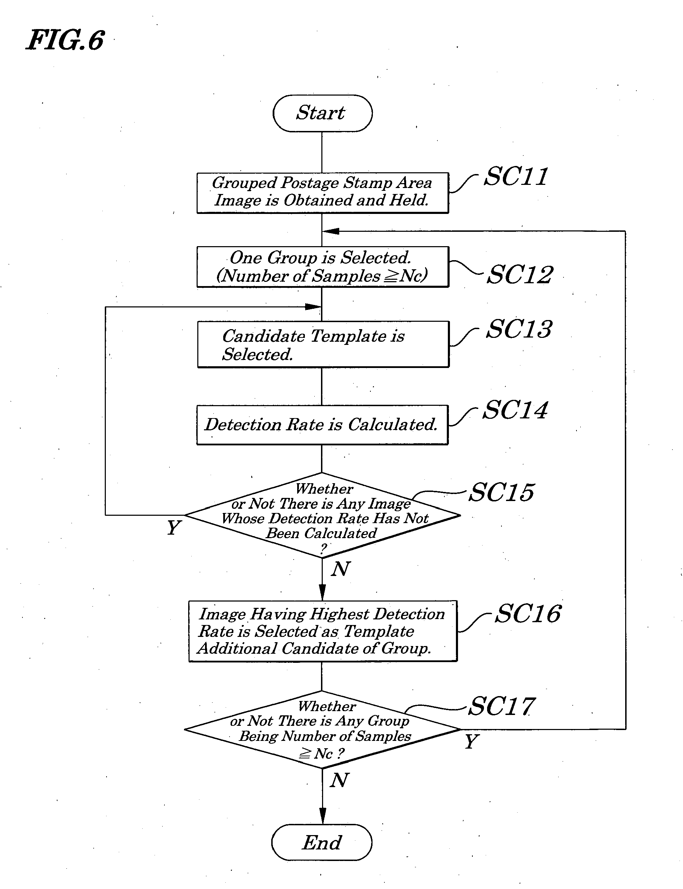

Figure 1 is a diagram explaining configurations of a postage stamp detecting module of the first embodiment of the present invention. Figure 2 is a block diagram showing configurations of an automatic mail differentiating apparatus equipped with the postage stamp detecting module of the first embodiment of the present invention. Figure 3 is a block diagram showing configurations of the postage stamp detecting module of the first embodiment of the present invention. Figure 4 is a process and procedure diagram explaining operations of the postage stamp detecting module of the first embodiment of the present invention. Figure 5 is also a process and procedure diagram explaining operations of the postage stamp detecting module of the first embodiment of the present invention. Figure 6 is also a process and procedure diagram explaining operations of the postage stamp detecting module of the first embodiment of the present invention.

The automatic mail differentiating apparatus 1, as shown in Fig. 2, includes a scanner 2 to capture an image of a postage stamp, a destination, or a like (for example, RGB [Red, Green, Blue] color image with 256 gray levels) affixed to mail carried at a constant speed, a postage stamp detecting module 3 to detect a postage stamp based on image information of mail, a destination detecting module 4 to detect a destination based on image information of mail, a surface alignment processing module 5 to align a direction of mail based on postage stamp detecting information and destination detecting information, a postmarking processing module 6 to postmark by using, for example, an ink jet printer, and an sorting processing module 7 to sort mail.

The postage stamp detecting module 3, as shown in Fig. 3, a control section 11 to control each component of the main body of the postage stamp detecting module 3, a storage section 12 to store processing programs to be executed by the control section 11, various data, or a like, an operating section 13 to be used by an operator, and a display section 14 to display image information of a template additional candidate and detectionrate information, or a like.

The control section 11 is made up of a CPU (Central Processing Unit) or a like and is configured to control each component according to a predetermined control program stored in the storage section 12 to perform, for example, a storage stamp detecting process, storage stamp area extracting process, storage stamp template clustering process, storage stamp template registering candidate selecting process, and storage stamp template registering process, or a like.

That is, the control section 11, by executing the control program stored in the storage section 12, as shown in Fig. 1, functions as a postage stamp detecting section 15, a postage stamp template registering section 16, a postage stamp area extracting section 17, a postage stamp template clustering section 18, a postage stamp template registering candidate selecting section 19, or a like.

The postage stamp detecting section 15 detects a postage stamp based on the image information "ga" of mail (for example, RGB color image with 256 gray levels) fed from the scanner 2. That is, the postage stamp detecting section 15 receives an entire image of mail and, by using an area set in, for example, right upper and left lower corners of mail (in the embodiment, area of 40 mm[H] x 80 mm[L] ) as an area for the detection of a postage stamp, matches the image information obtained in the postage stamp detecting area with a pre-registered postage stamp template by performing pattern matching to detect a postage stamp.

Moreover, the postage stamp detecting area in the left lower corner of mail is set assuming that mail is fed in a state in which mail is rotated 180 ° to the automatic mail differentiating apparatus 1. The postage stamp detecting section 15, when succeeding in detecting a postage stamp, transmits postage stamp detected information "gb" to the surface alignment processing module 5, postmarking processing module 6, and sorting processing module 7 and, when failing in detecting a postage stamp, transmits an entire image (for example, RGB color image with 256 gray levels) of mail as a detection failed image "gc" to the postage stamp area extracting section 17 and postage stamp template registering candidate selecting section 19.

The postage stamp area extracting section 17, when receiving an entire image of mail from the postage stamp detecting section 15, performs a background color estimating process and postage stamp area image extracting process. The postage stamp area extracting section 17 performs, in the background color estimating process, a process of quantitizing an entire image of mail into an image with 16 gray levels based on the received entire image of mail, a process of producing a histogram for each of RGB colors (range of x axis [range of gray levels] is 0 to 15), a process of estimating a pixel value with the highest frequency of occurrence in each histogram for RGB as a pixel value of a background color, and a process of converting a pixel value with 16 gray levels back into a pixel value with 256 gray levels. For example, when a background color pixel value of R is "12" in 16 gray levels, it becomes "192" to "207" in 256 gray levels.

The postage stamp area extracting section 17, in the storage stamp area image extracting process, by using an estimated background color, removes a background pixel in the storage stamp area and uses a remaining area as a storage stamp area image. Here, when a plurality of areas is left, a plurality of storage stamp area images is extracted and, when there is no area corresponding to the storage stamp area, it is determined that there is no storage stamp area to be extracted. Thus, the postage stamp area extracting section 17 extracts an image (RGB color image) in the postage stamp area for entire images (all detection failed images) of mail sent from the postage stamp detecting section 15 and transmits the extracted postage stamp area extracting image "gd" to the postage stamp template clustering section 18.

The postage stamp template clustering section 18 performs a process of grouping the received postage stamp extracting images for every storage image of the same type by performing the pattern matching process in the same manner as performed by the postage detecting section 15. That is, the postage stamp template clustering section 18 performs a process of storing postage stamp area extracted images transferred from the postage stamp area extracting section 17 until the number of postage stamp area extracted images reaches the number of clustering start procedures set and determined in advance (in the embodiment, the number of clustering start procedures the number of 100, 000), a process of selecting a temporary template by randomly selecting one postage stamp area extracted image from many postage stamp area extracted images when the number of the stored postage stamp area extracting images exceeds the number of clustering start procedures to use the selected postage stamp area extracted image as a temporary template, a process of matching by selecting an image having the same characteristic as the temporary template by performing matching between the temporary template and all other postage stamp area extracting images, more specifically by performing the pattern matching in the same manner as performed by the postage stamp detecting section 15, and a process of grouping images each having the temporary template and the same characteristic as the temporary template to classify the images into one group.

The postage stamp template clustering section 18, after having extracted one group, repeatedly performs the process of selecting the above temporary template, checking and grouping processes on all remaining postage stamp area extracting images and completes grouping of postage stamp area extracting images. The postage stamp template clustering section 18 transmits the grouped postage stamp area extracted image "ge" and grouped information "gf" to the postage stamp template registering candidate selecting section 19.

The postage stamp template registering candidate selecting section 19, when each group divided by the postage stamp template clustering section 18 is additionally registered as a postage stamp template, selects a postage stamp area extracting image having a high detection rate (for example, 1% or more) as a postage stamp template registering candidate. That is, the postage stamp template registering candidate selecting section 19 calculates a postage stamp detection rate obtained when a postage stamp area extracting image is selected as a postage stamp template and selects the postage stamp area extracting image having the postage stamp detection rate being a predetermined value or more and being the highest as a postage stamp template candidate for each of the extracted groups.

The postage stamp template registering candidate selecting section 19 performs a process of selecting groups having the number (as the number of samples) of the postage stamp area extracting images being a specified number or more (for example, 1000 or more) from grouped postage stamp area extracting images transferred from the postage stamp template clustering section 18, a process of selecting one postage stamp area extracting image out of the selected groups, a process of calculating, a postage stamp detection rate to be obtained when the selected postage stamp area extracting image is additionally registered as a postage stamp template (by dividing the number of detection failed images by which the detection of a postage stamp is made possible using the selected postage stamp area extracting image [pattern] by all the number of detection failed images) with respect to detection failed entire images, and a process of selecting a postage stamp area extracting image having the highest postage stamp detection rate as a postage stamp template additional registering candidate being representative of each of the groups.

The postage stamp template registering candidate selecting section 19 calculates postage stamp detection rates of all the postage area extracting images in each of the groups and selects the postage stamp area extracting image having the highest postage detection rate as a postage stamp template additional registering candidate being representative of each of the groups and selects the postage stamp template additional registering candidate using having the highest postage detection rate as a representative of each of groups and also selects the postage stamp additional registering candidate for groups having the specified number of samples or more of the postage stamp area extracting images. The postage stamp template registering candidate selecting section 19 transfers the postage stamp template additional registering candidate "gh" and corresponding detection improvement rate information "gi" to the postage stamp template registering section 16.

The postage stamp template registering section 16 performs a process of displaying the postage stamp template additional registering candidate in each of the groups transmitted from the postage stamp template registering candidate selecting section 19 and detection improvement rate information on the display section 14 and a process of storing the postage stamp template additional registering candidate as a postage stamp template "gj" in the storing section. A postage stamp template "gj" containing an additionally registered postage stamp area extracting image is referenced to by the postage stamp detecting section 15. Moreover, the postage stamp template additional registering candidate required not to be stored is discarded.

The storing section 12 is made up of a semiconductor memory such as a ROM (Read Only Memory), RAM (Random Access Memory) or a like, FDD (Floppy Disk Drive) and HDD (Hard Disk Drive) equipped with a CD-ROM (Compact Disk ROM) driver or a like and stores various programs or data. The storing section 12 has a program storing section to store control programs or a like and an information storing section to store various information.

The program storing section includes, for example, a storing area to store a postage stamp process program, a storing area to store a postage stamp area process program, a storing area to store a postage stamp template clustering process program, a storing area to store a template registering candidate selecting process program, and a storing area to store a postage stamp template registering process program. The information storing section includes a template storing area to store a postage template and an image information storing area to store obtained information.

The operating section 13 is made up of, for example, a keyboard, mouse, or a like and is used to input various instructions and required information. The displaying section 14 is made up of a CRT (Cathode-Ray Tube) display, a liquid crystal display, or a like and is used to display characters and/or images.

Next, operations of the postage stamp detecting module are described by referring to Figs. 4 to 6. Mail, when being introduced into the automatic mail differentiating apparatus 1, is carried by, for example, a carrying belt and its entire images (for example, RGB color image with 256 gray levels) are picked up by the scanner 2. The scanner 2 transfers image information (entire image) of mail to the postage stamp detecting module 3 and the destination detecting module 4.

The postage stamp detecting section 15 detects a postage stamp based on the image information "ga" (for example, RGB color image with 256 gray levels) of mail fed from the scanner 2. That is, the postage stamp detecting section 15 receives all images of mail and, by using an area set in, for example, right upper and left lower corners of mail (in the embodiment, area of 40 mm[H] x 80 mm[L] ) as an area for the detection of a postage stamp, performs matching between the image information obtained in the postage stamp detecting area and a pre-registered postage stamp template, more specifically, by performing pattern matching to detect a postage stamp.

The postage stamp detecting section 15, when succeeding in detecting a postage stamp, transmits information "gb" about detected postage stamps to the surface alignment processing module 5, postmarking processing module 6, and sorting processing module 7 and, when failing in detecting a postage stamp, transmits an entire image (for example, RGB color image with 256 gray levels) of mail as a detection failed image "gc" to the postage stamp area extracting section 17 and postage stamp template registering candidate selecting section 19.

The postage area extracting section 17, after receiving an entire image (detection failed image) of mail fed from the postage stamp detecting section 15, holds the entire images of mail (Step SA11 [Fig. 4] ) and judges whether or not the number of held images becomes the number of specified images Na or more (Step SA12). In the postage stamp area extracting section 17, when it is judged that the number of held images has become a specified number of images "Na" or more, the routine proceeds to Step SA13 and, when the number of held images is less than the specified number of images "Na", the routine returns back to Step SA11.

In Step SA13, the postage stamp area extracting section 17 selects any one of entire images of large quantities of mail being held and quantitizes the entire images of mail into images with 16 gray levels (Step SA14). Next, the postage stamp area extracting section 17 performs a process of producing a histogram for each color of RGB (range of x axis [range of gray levels] is 0 to 15) (Step SA15) and, then, a process of estimating a pixel value having the highest frequency of occurrence on each histogram as a pixel value of a background color (Step SA16). Next, the postage stamp area extracting section 17 performs a process of converting a pixel value with 16 gray levels back into a pixel value with 256 gray levels (Step SA17). For example, when a background color pixel value of R is "12" in 16 gray levels, it becomes "192" to "207" in 256 gray levels in 256 gray levels.

Next, the postage stamp area extracting section 17, by using an estimated background color, removes a background color pixel in a postage stamp detecting area and uses a left area as a postage stamp area image (Step SA18). If a plurality of areas is left, a plurality of postage stamp area images is extracted and, if there is no corresponding area, the case is treated as no postage stamp area image to be extracted.

Then, in Step SA19, the postage stamp area extracting section 17 judges whether or not there is a succeeding image (not processed image out of entire images of held mail) and if the succeeding image exists, the routine returns back to Step SA13 and, if no succeeding image exists, the process is terminated. Thus, the postage stamp area extracting section 17 extracts an image (RGB color image) in a postage stamp area from entire images (all detection failed images) of mail fed from the postage detecting section 15 and transmits an extracted postage stamp area extracted image "gd" to the postage stamp template clustering section 18.

The postage stamp template clustering section 18, by the pattern matching in the same manner as performed by the postage detecting section 15, performs a process of grouping the received postage stamp area extracted image for every postage stamp of the same type.

That is, the postage stamp template clustering section 18, when obtaining the postage stamp area extracting image fed from the postage stamp area extracting section 17, holds a postage stamp area extracted image (Step SB11, Fig. 5) and judges whether or not the number of postage stamp area extracted images has reached the pre-set number "Nb" (in the embodiment, 100, 000) of clustering start procedures (Step SB12) and, when it is judged that the number of postage stamp area extracted images has reached the number "Nb" of clustering start procedures, the routine proceeds to Step SB 13 and, when it is judged that the number of postage stamp area extracted images is less than the number "Nb" of clustering start procedures, the routine returns back to Step SB11.

In Step SB 13, the postage stamp template clustering section 18 randomly selects one postage stamp area extracted image out of many postage stamp area extracted images and uses the selected postage stamp area extracted image as a temporary template. Next, the postage stamp template clustering section 18 performs matching between the temporary template and all other postage stamp area extracted images, more specifically, by the pattern matching in the same manner as performed by the postage detecting section 15, and performs a process of matching and selecting an image having the same characteristic as the temporary template (Step SB14) . Then, the postage stamp template clustering section 18 performs a process of grouping the temporary templates and selected images having the same characteristics to classify the images into one group (Step SB15).

Next, in Step SB16, the postage stamp template clustering section 18 judges whether or not there is any postage stamp area image not yet grouped and, if any postage stamp area image to be processed exists, the routine returns back to Step SB13 and, if no postage stamp area image to be processed exist, the routine is terminated. Thus, the postage stamp template clustering section 18, after having extracted one group, repeatedly performs the above temporary template selecting process and matching and grouping process on all remaining postage stamp area extracted images to complete grouping of the postage area extracted image. The postage stamp template clustering section 18 transmits the grouped postage stamp area extracted image "ge" and grouped information "gf" to the postage stamp template registering candidate selecting section 19.

The postage stamp template registering candidate selecting section 19, when each group divided by the postage stamp template clustering section 18 is additionally registered as a postage stamp template, selects a postage stamp area extracted image having a high postage detection rate (for example, 1% or more) as a postage stamp template registering candidate. That is, the postage stamp template registering candidate selecting section 19 calculates the detection rate of the postage stamp area extracted image employed as a postage stamp template and selects the postage stamp area extracted image the postage area detection rate of which is a specified value or more and is the highest as a postage stamp template of each of the groups.

The postage stamp template registering candidate selecting section 19 obtains the grouped postage stamp area extracted images transferred from the postage stamp template clustering section 18 and holds the grouped postage stamp area extracted images (Step SC11 [Fig.6]) and then selects a group having the number of a postage area extracted image (the number of samples "Nc") being a specified number or more (for example, 1000 or more) (Step SC12) .

Next, the postage stamp template registering candidate selecting section 19 selects one postage stamp area extracted image out of selected groups (Step SC13) . Then, the postage stamp template registering candidate selecting section 19 calculates a postage stamp detection rate to be obtained when a selected postage stamp area extracting image is additionally registered as a postage stamp template (by dividing the number of detection failed images by which the detection of a postage stamp is made possible using the selected postage stamp area extracting image [pattern] by all the number of detection failed images) with respect to detection failed entire images (Step SC14).

Next, the postage stamp template registering candidate selecting section 19 judges whether or not there is any postage stamp area extracting image whose postage stamp detection rate has not been calculated in selected groups (Step SC15). The postage stamp template registering candidate selecting section 19, when judging that there is a postage stamp area extracting image whose postage stamp detection rate has not been calculated, returns its routine back to Step SC13 and, when judging that there is no postage stamp area extracting image, makes its routine proceed to SC16.

In Step SC16, the postage stamp template registering candidate selecting section 19 selects a postage stamp area extracted image having the highest postage stamp detection rate as a postage stamp template additional registering candidate being representative of each of the groups. Next, the postage stamp template registering candidate selecting section 19 judges whether or not there is any group for which a postage stamp template additional registering candidate has not been selected (the number of samples is "Nc" or more) out of held groups. The postage stamp template registering candidate selecting section 19, when there is any image having been not yet processed, returns its routine back to Step SC12 and, when there is no image having been not yet processed, terminates its processing.

Thus, the postage stamp template registering candidate selecting section 19 calculates postage stamp detection rates of all postage stamp area extracted images in each of the groups and selects a postage stamp area extracted image having the highest postage stamp detection rate as a postage stamp template additional registering candidate being representative of each of the groups and also selects a postage stamp template additional registering candidate for groups having the number of samples being a specified number or more. The postage stamp template additional registering candidate selecting section 19 transfers a postage stamp template additional registering candidate "gh" and corresponding detection improvement rate information "gi" to the postage stamp template registering section 16.

The postage stamp template registering section 16 performs a process of displaying a postage stamp template additional registering candidate of each group transferred from the postage stamp template registering candidate selecting section 19 and detection improvement rate information on the display section 14 and a process of storing, by operations of an operator visually checking a postage stamp area extracted image to be additionally registered, a postage stamp template additional registering candidate, as a postage stamp template "gj" in the storing section 12. A postage stamp template "gj" containing a postage stamp area extracted image additionally registered is referred to. Moreover, a postage stamp template additional registering candidate that requires no registration is discarded.

While the postage stamp detecting module 3 is performing a postage stamp detecting process, the destination detecting module 4 detects a destination of mail based on a color image. Thereafter, surfaces of mail are aligned (toward a direction of mail) by the surface alignment processing module 5 so that detected postage stamps are placed on a lower side, for example, along a carrying direction and mail is postmarked by the postmarking processing module 6, for example, by using an ink jet printer and is sorted by the sorting processing module 7.

Thus, according to the embodiment, a postage stamp template additional registering candidate is automatically created from detection failed images by the postage stamp area extracting section 17, postage stamp template clustering section 18, and postage stamp template registering candidate selecting section 19, and a postage stamp template additional registering candidate and detection improvement rate information are displayed on the displaying section 14, thereby enabling automatic, simple, and reliable additional registration of a postage stamp template and reduction of operator's loads by additional registering processing of a postage stamp template. That is, unlike in the conventional technology, it is not necessary that an operator collects an image to be used for registration of a postage stamp and clips a postage stamp area.

Moreover, the postage stamp template registering candidate selecting section 19 calculates a postage stamp detection rate for every group and for every postage stamp area extracted image and, after verification, a postage stamp template registering candidate expected to contribute to an increase of the detection rate is selected, thereby reliably improving the postage stamp detection rate by one time registration.

### Second Embodiment

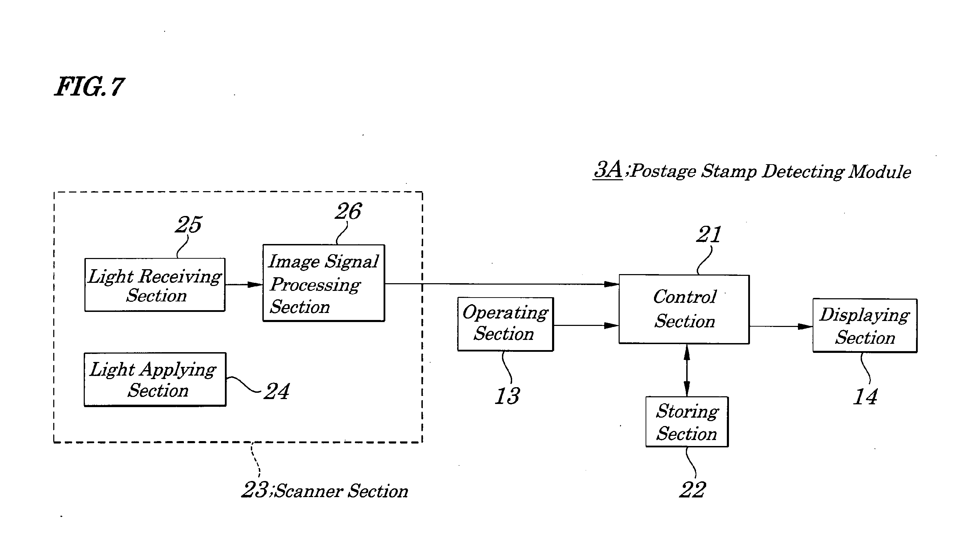

Figure 7 is a block diagram showing configurations of a postage stamp detecting module of the second embodiment of the present invention. The postage stamp detecting module of the second embodiment differs greatly from that of the first embodiment in that the detection module is provided with a scanner function and a postage stamp area is identified by receipt of fluorescence and phosphorescence emitted from a postage stamp. Configurations other than above are the same as in the first embodiment and, in Fig. 7, same reference numbers are assigned to components having the same function as in the first embodiment shown in Fig. 3 and their descriptions are omitted accordingly.

The postage stamp detecting module 3A, as shown in Fig. 7, includes a control section 21 to control each component of a main body of the postage stamp detecting module 3A, a storing section 22 to store processing programs to be executed by the control section 21 and/or various data or a like, an operating section 13 to be used by an operator, a displaying section 14 to display image information about a template additional candidate, detection rate, or a like and a scanner section 23 to capture an image of a postage stamp affixed to mail being transferred at a constant speed. The scanner section 23 has a light applying section 24 to apply ultraviolet light to mail, a light receiving section 25 to receive fluorescence and/or phosphorescence, an image signal processing section 26 made up of a CCD (Charge Coupled Device) circuit to make photoelectric conversion and A/D (Alternating current/Direct current) conversion circuit.

The control section 21 controls each component according to a specified control program stored in the storing section 22 and performs, for example, a postage stamp detection process, postage stamp area extracting process, postage stamp template clustering process, postage stamp template registering candidate selecting process, postage stamp template registering process, or a like. Out of entire images of mail output from the scanner section 23, only a postage stamp image (fluorescent or phosphorescent image) becomes bright and an area other than a postage stamp image becomes dark. In this embodiment, postage stamp area extracting process may be omitted.

By configuring as above, approximately the same effect as in the first embodiment can be obtained. Additionally, the postage stamp area extracting process may be omitted, which enables processes up to selection of a postage stamp template additional registering candidate to be performed at high-speed.

It is apparent that the present invention is not limited to the above embodiments but may be changed and modified without departing from the scope and spirit of the invention. For example, in the above embodiments, in the postage stamp detecting module, the control section executes corresponding control programs to perform the postage stamp region extracting process, the postage stamp template clustering process, the postage stamp template registering candidate selecting process, the postage stamp template registering process, or the like. Part or all of the postage stamp detecting processes, the postage stamp template clustering process, the postage stamp template registering candidate selecting process, the postage stamp registering process, or the like are performed by dedicated hardware and remaining other programs may be performed.

Also, the postage stamp detecting process, the postage stamp area extracting process, the postage stamp template clustering process, the postage stamp template registering candidate selecting process, the postage stamp template registering process, or the like may be performed individually by respective CPUs or by a single CPU. Moreover, each of the above processes may be performed by respective information processing devices. These information processing devices may be displaced in a concentrated or dispersed manner. Furthermore, not only a single postage stamp detection module but also a plural postage stamp detection module may be installed.

Additionally, the scanner may be provided in a manner to individually correspond to the postage stamp detecting module and a destination detecting module or each of the postage stamp detecting module and destination detecting module may be provided with the scanner. As the scanner, a line sensor may be used or a scanner may be used which is able to scan an entire surface of mail at one time by using an area sensor having an image pickup device placed in a matrix form. The scanner may use a color scanner or a monochrome linear CCD array.

Moreover, in the above embodiments, a postage stamp template registering candidate selecting section selects a postage stamp area extracting image having a postage stamp detection rate being a specified value or more and having the highest postage stamp detection rate as a postage stamp template candidate for the group, however, it is not necessary that the postage stamp detection rate of all postage stamp area extracted images belonging to a group and, if there is a postage stamp area extracted image having a postage stamp detection rate being a specified value or more, the postage stamp area extracted image may be selected as the postage stamp template candidate for the group and processes thereafter may be omitted.

Also, in the postage stamp detecting module, information about the clipped postage stamp may be fed to the postage stamp detecting module without performing a postage stamp area extracting process. Moreover, a given postage stamp area extracted image may be selected out of images having been not detected without performing the postage stamp template clustering process and only a predetermined number of the postage stamp area having a postage stamp detection rate being a specified value or more may be selected.

Also, in the first embodiment, after clipping a postage stamp area from a background image, repeated matching process may be performed. In the second embodiment, the postage stamp detection module is provided with the light applying section to apply ultraviolet rays to mail and light receiving section to receive fluorescent light and phosphorescent light from mail, however, the light applying section and the light receiving section may be attached to the scanner or can be used independently. In the second embodiment, ultraviolet rays to emit fluorescent light and/or phosphorescent light are used, however, light is not limited to this and X rays and gamma rays may be used. Furthermore, in the second embodiment, an eliminating device to make a contour of mail clear may be provided.

The present invention can be applied not only to a case where a postage stamp affixed to mail is to be detected, but also to a case where a stamp affixed as a certificate stamp is to be detected. The present invention can be applied not only to a standard-size mail but also to a nonstandard-size mail. Furthermore, the present invention can be applied when a certificate stamp affixed to, in addition to mail, paper sheets used as general private and public documents is detected.

## Claims

1. A certificate stamp identifying system **characterized by** comprising:
a template storing means to store templates of various certificate stamps;
a certificate stamp image obtaining means to obtain image information of each of said certificate stamps affixed to paper sheets; and
a certificate stamp detecting means to detect each of said certificate stamps based on a result from matching between the obtained image information of each of said certificate stamps and each of said templates;
wherein said certificate stamp detecting means comprises a template creating means to create, when judging that there is no template matching with any one of said certificate stamps, a template of each of said certificate stamps having been not detected based on said image information;
wherein said template creating means comprises a candidate selecting means to select template candidates from said image information of a plurality of said certificate stamps having been not detected based on a specified rule, a trial detection operating means to perform trial detection of each of said certificate stamps based on a result from matching between the not-detected image information excepting said template candidates, a detection rate calculating means to calculate a detection rate showing a rate of said certificate stamps newly becoming detectable to said not-detected certificate stamps at a time of the trial detection operations by using said template candidates, and a template selecting means to select the template candidates each having said detection rate being a specified value or more as said template.

2. The certificate stamp identifying system according to Claim 1, wherein said candidate selecting means selects a plurality of the template candidates, said trial detection operating means performs an operation of detecting each of said certificate stamps on a trial basis by using each of said template candidates and said detection rate calculating means calculates a detection rate corresponding to each of said template candidates.

3. The certificate stamp identifying system according to Claim 1 or Claim 2, further comprising a template registration control means to register said template created by said template creating means as said template to be used for detection of each of said certificate stamps in said template storing means.

4. The certificate stamp identifying system according to Claim 3, still further comprising a displaying control means to display said template created by said template creating means on a displaying means and an operating means to perform registration operation of said template and wherein said template registration control means, when an operation for registration is performed by an operator via said operating means, makes said template be registered in said template storing means.

5. The certificate stamp identifying system according to Claim 4, wherein said displaying control means displays said template and the corresponding detection rate on said displaying means.

6. The certificate stamp identifying system according to any one of Claim 1 to Claim 5, wherein said template creating means comprises a postage stamp area extracting means to extract image information of a postage stamp area based on image information of said paper sheets obtained by said certificate stamp image obtaining means.

7. The certificate stamp identifying system according to Claim 6, wherein said template creating means obtains color image information of said paper sheets and wherein said postage stamp area extracting means comprises a background color estimating means to estimate a background color surrounding a postage stamp area based on color image information of said paper sheets and an image processing means to use an image of an area left after removing background pixels out of specified areas of said paper sheets as a postage stamp area image.

8. The certificate stamp identifying system according to any one of Claim 1 to Claim 7, wherein said template creating means comprises a certificate stamp image classifying means to classify a plurality of pieces of not detected image information into groups each made up of collected pieces of said image information having approximately same features and wherein said candidate selecting means selects said template candidate representing each of said groups out of said not detected image information belonging to said groups.

9. The certificate stamp identifying system according to any one of Claim 1 to Claim 8, wherein said candidate selecting means randomly selects said template candidate out of a plurality of pieces of the not detected image information of said certificate stamps.

10. The certificate stamp identifying system according to any one of Claim 1 to Claim 9, wherein said certificate stamp detecting means serves also as said trial detection operating means.

11. The certificate stamp identifying system according to any one Claim 1 to Claim 10, wherein said system is used in an automatic mail differentiating apparatus to differentiate mail being said paper sheets and identifies postage stamps serving as said certificate stamps affixed to said mail.

12. A certificate stamp identifying method **characterized by** comprising:
a certificate stamp image obtaining step of obtaining image information about various certificate stamps affixed to paper sheets; and
a certificate stamp detecting step of detecting each of said certificate stamps based on results from matching between the obtained image information and each of templates of said certificate stamps stored in a template storing means;
wherein, if it is judged that there is no matched template in said certificate stamp detecting step, a template creating step is performed to create templates of the not detected certificate stamps; and
wherein said template creating step comprises:
a candidate selecting step of selecting a template candidate out of a plurality of pieces of said image information about said certificate stamps having not been detected;
a trial detection operating step of performing an operation of detecting each of said certificate stamps on a trial basis based on a result from matching between said template candidate and said information about the not-detected images excepting said template candidate;
a detection rate calculating step of calculating a detection rate of said certificate stamps newly becoming detectable at a time of the trial detection operating step to said certificate stamps having not been detected by using said template candidate; and
a template selecting step of selecting said template candidate having said detection rate being a specified value or more as said template.

13. The certificate stamp identifying method according to Claim 12, wherein said candidate selecting step selects a plurality of the template candidates, said trial detection operating step performs an operation of detecting each of said certificate stamps on a trial basis by using each of said template candidates and said detection rate calculating step calculates a detection rate corresponding to each of said template candidates.

14. The certificate stamp identifying method according to Claim 12 or Claim 13, wherein said template creating step comprises a postage stamp area extracting step to extract image information of a postage stamp area based on image information of said paper sheets obtained by said certificate stamp image obtaining step.

15. The certificate stamp identifying method according to Claim 14, wherein said template creating step obtains color image information of said paper sheets and wherein said postage stamp area extracting step comprises a background color estimating step to estimate a background color surrounding a postage stamp area based on color image information of said paper sheets and an image processing step to use an image of an area left after removing background pixels out of specified areas of said paper sheets as a postage stamp area image.

16. The certificate stamp identifying method according to any one of Claim 12 to Claim 15, wherein said template creating step comprises a certificate stamp image classifying step to classify a plurality of pieces of not detected image information into groups each made up of collected pieces of said image information having approximately same features and wherein said candidate selecting step selects said template candidate representing each of said groups out of said not detected image information belonging to said groups.

17. The certificate stamp identifying method according to any one of Claim 12 to Claim 16, wherein said candidate selecting step randomly selects said template candidate out of a plurality of pieces of the not detected image information of said certificate stamps.

18. The certificate stamp identifying method according to any one Claim 12 to Claim 17, wherein said method is used in an automatic mail differentiating apparatus to differentiate mail being said paper sheets and identifies postage stamps serving as said certificate stamps affixed to said mail.
